(19) Europäisches Patentamt

European Patent Office

Office européen des brevets

(11) Publication number: **0 296 568 B1**

(12) **EUROPEAN PATENT SPECIFICATION**

(45) Date of publication of patent specification: **21.10.92**

(51) Int. Cl.⁵: **B60G 7/00**

(21) Application number: **88109944.4**

(22) Date of filing: **22.06.88**

(54) **Method for assembling the terminal portion of a motor vehicle wheel axle support-member, and the terminal portion produced by this method.**

(30) Priority: **26.06.87 IT 6755487**

(43) Date of publication of application:
**28.12.88 Bulletin  88/52**

(45) Publication of the grant of the patent:
**21.10.92 Bulletin  92/43**

(84) Designated Contracting States:
**DE ES FR GB SE**

(56) References cited:
**DE-A- 1 580 533      DE-A- 2 332 581
FR-E- 82 194          GB-A- 948 862
GB-A- 998 060         US-A- 4 117 300**

(73) Proprietor: **FIAT AUTO S.p.A.
Corso Giovanni Agnelli 200
I-10135 Torino(IT)**

(72) Inventor: **Balestrino, Giovanni
Via Dante di Nanni 16/2
I-10040 Orbassano(IT)**
Inventor: **Bruno, Alfonso
Via Buenos Aires, 106
I-10100 Torino(IT)**
Inventor: **Rabino, Edoardo
Corso Benedetto Croce, 36
I-10100 Torino(IT)**
Inventor: **Cerrato, Edilio
Via Buenos Aires, 116
I-10100 Torino(IT)**

(74) Representative: **Boggio, Luigi et al
STUDIO TORTA Società Semplice Via Viotti, 9
I-10121 Torino(IT)**

EP 0 296 568 B1

## Description

This invention relates to a method for assembling the terminal portion of a motor vehicle wheel axle support member.

The invention also relates to a terminal portion produced by said method.

Terminal portions of the aforesaid type are known to comprise an arm, at one end of which a seat is provided for a wheel carrier hub which is rigidly fixed to an annular flange. The said components are currently assembled using conventional arc welding, by which a structure is produced with good mechanical characteristics but requiring subsequent machine finishing, in that while welding the components, deformation occurs by material shrinkage, which is typical of this work. The finishing which is required after welding consists of restoring the required dimensional tolerances of the structure using appropriate machine tools. Such finishing operations obviously increase production costs and involve relatively lengthy operation times. Another welding method currently finding increasing use, mainly because it can be automated, is high-density energy welding using for example laser, electron beam or miniplasma technology. However, this welding method requires the various components of the terminal portion to make precise mutual contact in order to form reliable weld seams which are free from defects and are of maximum possible extension.

An object of the present invention is to provide a method for assembling the terminal portion of a motor vehicle wheel axle support member, which is free from the aforesaid drawbacks and which in particular enables high-density energy to be used.

A further object of the present invention is, using said method, to provide a terminal portion having excellent mechanical characteristics and low production costs.

Further objects and disadvantages of the present invention will be apparent from the description given hereinafter. The invention provides a method for assembling the terminal portion of a motor vehicle wheel axle support member comprising: a hub: an annular flange; and two substantially U-section half-shells each having a semicylindrical end portion arranged orthogonal to the longitudinal axis of said half-shell, characterized by comprising the following operations in succession:

- positioning one of said two half-shells on the other one to form a cylindrical seat by means of said end portions, and such that the edges of said one half-shell mate with the corresponding edges of the other one;
- welding said half-shells together along said edges;
- inserting said hub into said seat in such a manner that an end portion of said hub remains external to said seat;
- welding said hub to said seat by a circumferential butt welding operation at the two axial ends of said hub;
- positioning said flange on said portion of said hub; and
- welding said flange onto said portion of said hub by a circumferential butt welding operation at the free axial end portion of said hub.

The present invention also provides said terminal portion of a the support member as defined in claim 4.

The invention will be more apparent from the description of a preferred embodiment thereof given hereinafter with reference to the accompanying drawings, in which:

Figure 1 is an exploded perspective veiw of the various components of a terminal portion of an automotive wheel axle support member before assembly;

Figures 2 to 4 show three separate stages of the method for assembling the components shown in Figure 1; and

Figure 5 is a perspective view of the terminal portion after assembly.

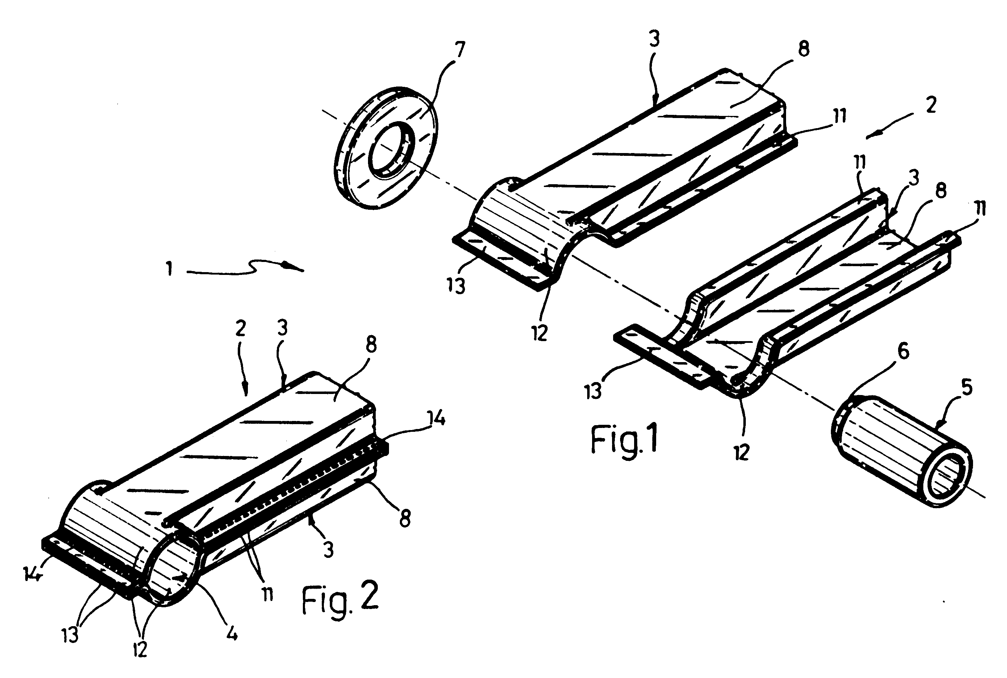

In Figure 1, the reference numeral 1 indicates overall the terminal portion of a motor vehicle wheel axle support member, hereinafter called "terminal", which is of the type comprising an arm 2 consisting of two half-shells 3 and in which, in proximity to an end thereof there is defined, when in use, a cylindrical seat 4 engaged by a wheel carrier hub 5, on an end portion 6 of which, external to the seat 4, there is fixed an annular flange 7. The half-shells 3 are substantially identical and are constructed of pressed plate. Specifically, each half-shell 3 comprises a central portion 8 of U-section having its longitudinal edges bent outwards at a right angle to define two respective longitudinal flanges 11. Each half-shell 3 also comprises and end portion 12 smoothly joined to the portion 8 and extending semicylindrically with its longitudinal axis orthogonal to that of the portion 8.

From an edge parallel to the longitudinal axis of the portion 12 there extends a flange 13 which is coplanar with the flanges 11 of the portion 8. It should be noted that the length of the portion 12 is equal to the width of the portion 8 including the flanges 11. On placing the half-shells 3 together, the portion 12 define said seat 4, which has an inner diameter equal to or slightly greater than the outer diameter of the hub 5. On fitting these pieces together, the flanges 11 and flanges 13 of the two half-shells 3 come into mutually aligned contact. The end portion 6 of the hub 5 has an outer diameter less than that of the part of the hub 5 housed in the seat 4. The portion 6 has the same length as the flange 7.

The method for assembling the terminal 1 comprises essentially the following operations in succession:

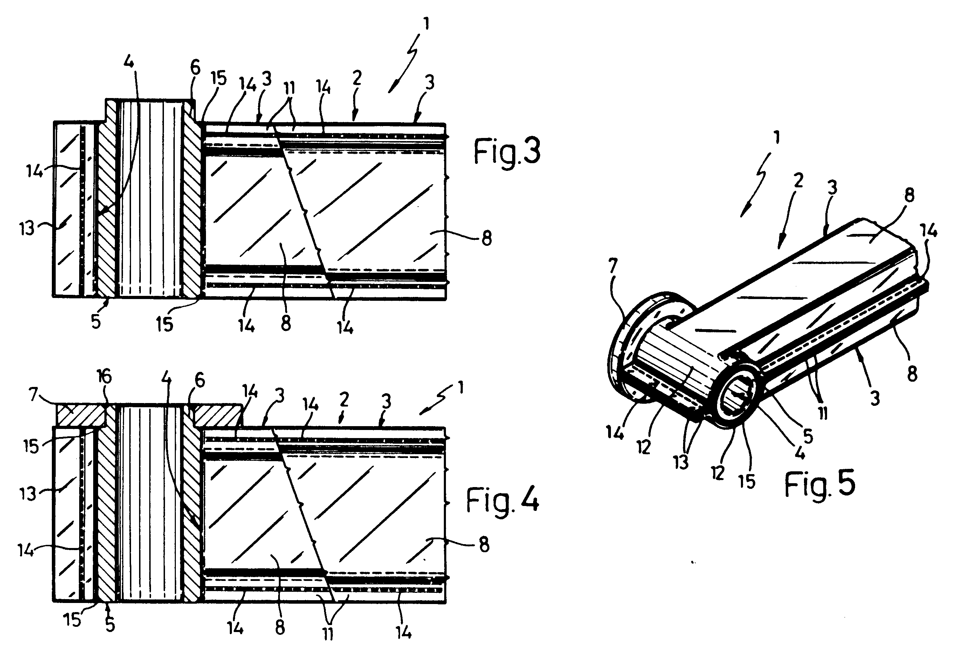

- one half-shell 3 is positioned on the other so that the flanges 11 and 13 and the portion 12 of one mate with those of the other;
- each flange 11 and 13 of one half-shell 3 is welded to the corresponding flange 11 and 13 of the other half-shell 3 by a high-density energy welding method, for example of laser type, to form respective weld seams (Figure 2) on the flanges 11 and 13;
- the hub 5 is inserted into the seat 4 such that its portion 6 is external to said seat 4;
- again using high-density welding, the hub 5 is welded along the seat 4 so as to form a circumferential butt weld seam 15 along each of the axial ends of the hub 5 (Figure 3);
- the flange 7 is positioned on the portion 6 of the hub 5; and
- again using the said welding method, the flange 7 is welded along the portion 6 to form a circumferential butt weld seam along the free axial end of the portion 6.

This welding by means of a high-density energy source can be implemented using for example laser, electron beam or miniplasma technology. This technology enables a continuous weld to be made which gives the terminal 1 excellent mechanical strength.

The advantages of the aforesaid method and of the terminal 1 obtained by said method are apparent from an examination of their characteristics.

In this respect, using said method a structure is obtained with excellent mechanical characteristics requiring no subsequent machine finishing. In addition, the method enables the advantages offered by high density welding to be gained, the use of which obviates the deformation which occurs when using conventional welding methods. Thus when assembled, the structure has very narrow dimensional tolerances. It should be noted that the aforesaid assembly of the terminal 1 can be advantageously automated using a suitable robotized machine. This enables terminals to be produced in a relatively short time at low cost.

The fact that the hub 5 and flange 7 are not of integral construction further increases the versatility of the terminal 1, with the result that flanges of different dimensions can be mounted according to requirements, and in addition the hub 5 can be welded into the seat 4 along both its axial ends, with all the advantages deriving therefrom in terms of mechanical strength.

Finally, it is apparent that modifications can be made to the aforesaid operations involved in the method for assembling the terminal 1 and to the terminal itself, but without leaving the protective scope of the present invention.

**Claims**

1.   A method for assembling the terminal portion of a motor vehicle wheel axle support member (1) comprising: a hub (5); an annular flange (7); and two substantially U-section half-shells (3) each having a semicylindrical end portion (12) arranged orthogonal to the longitudinal axis of said half-shell (3), characterized by comprising the following operations in succession:
- positioning one of said two half-shells (3) on the other one to form a cylindrical seat (4) by means of said end portions (12), and such that the edges (11 and 13) of said one half-shell (3) mate with the corresponding edges of the other one;
- welding said half-shells (3) together along said edges (11 and 13);
- inserting said hub (5) into said seat (4) in such a manner that an end portion (6) of said hub (5) remains external to said seat (4);
- welding said hub (5) to said seat (4) by a circumferential butt welding operation at the two axial ends of said hub (5);
- positioning said flange (7) on said portion (6) of said hub (5); and
- welding said flange (7) onto said portion (6) of said hub (5) by a circumferential butt welding operation at the free axial end portion (6) of said hub (5).

2.   A method as claimed in claim 1, characterized in that at least one of said welding operations is implemented using a high-density energy source.

3.   A method as claimed in claim 2, characterized in that said high-density energy source is selected from one of the followings: laser, electron beam, miniplasma.

4.   The terminal portion of a motor vehicle wheel axle support member produced according to the successive assembly operations defined in claim 1 and comprising: two substantially U-section half-shells (3) welded together to form an arm (2), each of said half-shells (3) having a semicylindrical end portion (12) arranged orthogonal to the longitudinal axis of said half-shell (3) and defining a cylindrical seat (4); a hub (5) housed in said seat (4); and an annular flange (7) mounted on an end portion (6) of said hub (5) which is external to said seat (4) whereby said half-shells (3) are welded toghether by: a first weld seam (14) formed along the mating edges (11 and 13) of said half-shells; a second circumferential butt weld seam (15) along the axial ends of said hub (5), between this latter and said seat; and a third circumferential butt weld seam (16) along the free axial end portion (6) of said hub (5), between this latter and said flange (7).

5. The terminal portion as claimed in claim 4, characterized in that in each of said half-shells (3) said mating edges include a first pair of longitudinal flanges (11) extending from a U-section central portion (8) of said half-shell (3), and a second flange (13) extending from said end portion (12) orthogonal to said longitudinal flanges (11).

6. The terminal portion as claimed in claim 5, characterized in that said first pair of flanges (11) are formed by bending the edges of said central portion (8) at a right angle.

7. The terminal portion as claimed in claim 6, characterized in that each one of said half-shells (3) has said first pair of flanges (11) coplanar with said second flange (13).

**Patentansprüche**

1. Verfahren zum Zusammenbau des Abschlusses der Achsenaufhängung (1) eines Kraftfahrzeugs, welcher umfaßt: eine Habe (5); einen ringförmigen Flansch (7); und zwei halbe Hülsen mit einem im wesentlichen U-förmigen Querschnitt (3), die jeweils einen halbzylindrischen Endabschnitt (12) aufweisen, der im rechten Winkel zur Längsachse der halben Hülse (3) angeordnet ist, dadurch gekennzeichnet, daß es die folgenden aufeinanderfolgenden Schritte umfaßt:
   - Anordnung einer der beiden halben Hülsen (3) auf der anderen, um durch die Endabschnitte (12) eine zylindrische Aufnahme (4) zu bilden, und in der Weise, daß die Kanten (11 und 13) der einen halben Hülse (3) mit den entsprechenden Kanten der anderen übereinstimmen;
   - Zusammenschweißen der halben Hülsen (3) entlang der Kanten (11 und 13);
   - Einsetzen der Habe (5) in die Aufnahme (4) in der Weise, daß ein Endabschnitt (6) der Habe (5) außerhalb der Aufnahme (4) bleibt;
   - Schweißen der Habe (5) an die Aufnahme (4) durch ein Umfangs-Stumpfschweißverfahren an den beiden axialen Enden der Habe (5);
   - Anordnen des Flansches (7) auf diesem Abschnitt (6) der Nabe (5); und
   - Schweißen des Flansches (7) auf den Abschnitt (6) der Nabe (5) durch Umfangs-Stumpfschweißverfahren am freien axialen Endabschnitt (6) der Nabe (5).

2. Verfahren nach Anspruch 1, dadurch gekennzeichnet, daß zumindest eines dieser Schweißverfahren unter Anwendung einer Energiequelle mit hoher Dichte durchgeführt wird.

3. Verfahren nach Anspruch 2, dadurch gekennzeichnet, daß diese Energiequelle mit hoher Dichte aus Laser, Elektronenstrahl, Miniplasma ausgewählt ist.

4. Abschluß der Achsenaufhängung eines Kraftfahrzeugs, der durch die in Anspruch 1 definierten aufeinanderfolgenden Zusammenbauschritte hergestellt wurde und welcher umfaßt: zwei halbe Hülsen (3) mit einem im wesentlichen U-förmigen Querschnitt, die zusammengeschweißt sind, um einen Arm (2) zu bilden, wobei jede dieser halben Hülsen (3) einen halbzylindrischen Endabschnitt (12) aufweist, der zur Längsachse der halben Hülse (3) im rechten Winkel angeordnet ist und eine zylindrische Aufnahme (4) definiert; eine Nabe (5), die in dieser Aufnahme (4) enthalten ist; und einen ringförmigen Flansch (7), der auf dem Endabschnitt (6) der Nabe (5) angebracht ist, der außerhalb der Aufnahme (4) liegt, wobei diese beiden halben Hülsen (3) zusammengeschweißt werden durch: eine erste Schweißnaht (14), die entlang der zusammenpassenden Kanten (11 und 13) der halben Hülsen ausgebildet ist; eine zweite Umfangs-Stumpfschweißnaht (15) entlang der axialen Enden der Nabe (5) zwischen dieser und der Aufnahme; und eine dritte Umfangs-Stumpfschweißnaht (16) entlang des freien axialen Endabschnittes (6) der Nabe (5) zwischen dieser und dem Flansch (7).

5. Abschluß nach Anspruch 4, dadurch gekennzeichnet, daß bei jeder der halben Hülsen (3) die zusammenpassenden Kanten ein erstes Paar Längsflansche (11), die sich vom mittleren Abschnitt (8) der halben Hülse (3) mit U-förmigem Querschnitt erstrecken, und einen zweiten Flansch (13) umfassen, der sich vom Endabschnitt (12) im rechten Winkel zu den Längsflanschen (11) erstreckt.

6. Abschluß nach Anspruch 5, dadurch gekennzeichnet, daß das erste Paar der Flansche (11) durch Biegen der Kanten des mittleren Abschnittes (8) im rechten Winkel gebildet ist.

7. Abschluß nach Anspruch 6, dadurch gekennzeichnet, daß bei jeder der halben Hülsen (3) das erste Paar der Flansche (11) in einer Ebene mit dem zweiten Flansch (13) liegt.

**Revendications**

1. Procédé pour assembler la partie terminale d'un élément de support (1) de l'essieu d'un véhicule automobile, comprenant: un moyeu (5); une bride annulaire (7); et deux demi-coques (3) possédant une section sensiblement en forme de U et comportant chacune une partie d'extrémité semi-cylindrique (12) disposée perpendiculairement à l'axe longitudinal de ladite demi-coque (1), caractérisé en ce qu'il comprend les opérations suivantes exécutées successivement :
   - positionnement de l'une desdites deux demi-coques (3) sur l'autre pour former un siège cylindrique (4) au moyen desdites parties d'extrémité (12), et ce de telle manière que les bords (11 et 13) de ladite première demi-coque (3) soit accouplés aux bords correspondants de l'autre demi-coque;
   - réunion par soudage lesdites demi-coques (3) l'une à l'autre le long desdits bords (11 et 13);
   - insertion dudit moyeu (5) dans ledit siège (4) de manière qu'une partie d'extrémité (6) dudit moyeu (5) reste à l'extérieur dudit siège (4);
   - soudage dudit moyeu (5) sur ledit siège (4) au moyen d'une opération de soudage circonférentiel en bout aux deux extrémités axiales dudit moyeu (5);
   - positionnement de ladite bride (7) sur ladite partie (6) dudit moyeu (5); et
   - soudage de ladite bride (7) sur ladite partie (6) dudit moyeu (5) au moyen d'une opération de soudage circonférentiel en bout sur la partie d'extrémité axiale libre (6) dudit moyeu (5).

2. Procédé selon la revendication 1, caractérisé en ce qu'au moins l'une desdites opérations de soudage est exécutée en utilisant une source d'énergie à haute densité.

3. Procédé selon la revendication 2, caractérisé en ce que ladite source d'énergie à haute densité est sélectionnée parmi l'une des suivantes : laser, faisceau d'électrons, miniplasma.

4. Partie terminale d'un élément de support d'essieu de véhicule automobile, fabriquée conformément aux opérations d'assemblage successives définies dans la revendication 1 et comprenant: deux demi-coques (3) possédant une section sensiblement en forme de U et réunies par soudage pour former un bras (2), chacune desdites demi-coques (3) possédant une partie d'extrémité semi-cylindrique (12) perpendiculaire à l'axe longitudinal de ladite demi-coque (3) et définissant un siège cylindrique (4); un moyeu (5) logé dans ladite siège (4); et une bride annulaire (7) montée sur une partie d'extrémité (6) dudit moyeu (5), qui est située à l'extérieur dudit siège (4), lesdites demi-coques (3) étant réunies par soudage au moyen : d'un premier cordon de soudure (14) formé le long des bords accouplés (11 et 13) desdites demi-coques; un second cordon circonférentiel de soudure en bout (15) le long des extrémités axiales dudit moyeu (5), entre ce dernier et ledit siège; et un troisième cordon circonférentiel de soudage en bout (16) le long de la partie d'extrémité axiale libre (6) dudit moyeu (5), entre ce dernier et ladite bride (7).

5. Partie terminale selon la revendication 4, caractérisée en ce que dans chacune desdites demi-coques (3), lesdits bords accouplés comprennent un premier couple de brides longitudinales (11) qui s'étendent depuis une partie centrale (8) à section en U de ladite demi-coque (3), et une seconde bride (13) qui s'étend à partir de ladite partie d'extrémité (12) perpendiculairement auxdites brides longitudinales (11).

6. Partie terminale selon la revendication 5, caractérisée en ce que ledit premier couple de brides (11) sont formées par pliage à angle droit des bords de ladite partie centrale (8).

7. Partie terminale selon la revendication 6, caractérisée en ce que dans chacune desdites demi-coques (3), ledit premier couple de brides (11) est coplanaire à ladite seconde bride (13).

Fig.1

Fig.2

Fig. 5

Fig. 3

Fig. 4